# EUROPÄISCHE PATENTANMELDUNG

(11) **EP 1 255 105 A1**
(43) Veröffentlichungstag der Anmeldung: **06.11.2002**
(21) Anmeldenummer: 02100368.6
(22) Anmeldetag: 12.04.2002
(51) Int. Cl.: G01N 21/31, G02B 21/00

(54) **Verfahren zur Untersuchung einer Probe und Scanmikroskop**

(30) Priorität: 26.04.2001 DE 10120425
(71) Anmelder: Leica Microsystems Heidelberg GmbH, 68165 Mannheim (DE)
(72) Erfinder: Engelhardt, Johann, Dr., 76669 Bad Schönborn (DE); Hoffmann, Jürgen, Dr., 65520 Bad Camberg (DE)
(74) Vertreter: Reichert, Werner F., Dr.

(57) **Zusammenfassung**

Ein Verfahren zur Untersuchung einer Probe (27), die mindestens zwei optische Übergangslinien aufweist und mindestens mit Licht einer ersten und mit Licht einer zweiten Wellenlänge optisch anregbar ist, ist gekennzeichnet durch den Schritt des Beleuchtens der Probe (27) mit Beleuchtungslicht (15), das mindestens ein Vielfaches der ersten Wellenlänge und ein Vielfaches der zweiten Wellenlänge aufweist und durch den Schritt des Detektierens des von der Probe (27) ausgehenden Detektionslichtes (29). Weiterhin ist ein Scanmikroskop (1) mit mindestens einer Lichtquelle (3) die Beleuchtungslicht (15) zur Beleuchtung einer Probe (27) emittiert, wobei die Probe (27) mindestens zwei optische Übergangslinien aufweist und mindestens mit Licht einer ersten und mit Licht einer zweiten Wellenlänge optisch anregbar ist, mit mindestens einem Detektor (41, 43, 65, 77, 79) zur Detektion des von der Probe (27) ausgehenden Detektionslichtes (29) und einem Objektiv (25) zur Fokussierung des Beleuchtungslichtes (15) auf einen Teilbereich der Probe (27), offenbart. Das Scanmikroskop ist dadurch gekennzeichnet, dass das Beleuchtungslicht (15) mindestens ein Vielfaches der ersten Wellenlänge und ein Vielfaches der zweiten Wellenlänge aufweist.

## Beschreibung

Die Erfindung betrifft ein Verfahren zur Untersuchung einer Probe, die mindestens zwei optische Übergangslinien aufweist und mindestens mit Licht einer ersten und mit Licht einer zweiten Wellenlänge optisch anregbar ist.

Weiterhin betrifft die Erfindung ein Scanmikroskop mit mindestens einer Lichtquelle, die Beleuchtungslicht zur Beleuchtung einer Probe emittiert, wobei die Probe mindestens zwei optische Übergangslinien aufweist und mindestens mit Licht einer ersten und mit Licht einer zweiten Wellenlänge optisch anregbar ist, mit mindestens einem Detektor zur Detektion des von der Probe ausgehenden Detektionslichtes und einem Objektiv zur Fokussierung des Beleuchtungslichtes auf einen Teilbereich der Probe.

Zur Untersuchung von biologischen Proben ist es seit langem üblich, die Probe mit optischen Markern, insbesondere mit Fluoreszenzfarbstoffen zu präparieren. Oft werden, beispielsweise im Bereich der Genuntersuchungen, mehrere unterschiedliche Fluoreszenzfarbstoffe in die Probe eingebracht, die sich spezifisch an bestimmten Probenbestandteilen anlagern. Aus den Fluoreszenzeigenschaften der präparierten Probe können beispielsweise Rückschlüsse auf die Beschaffenheit, die Zusammensetzung der Probe oder auf Konzentrationen bestimmter Stoffe innerhalb der Probe gezogen werden.

In der Scanmikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahles wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahles zu einem dreidimensionalen Bild führt. Meist wird ein dreidimensionales Bild durch schichtweise Bilddatennahme erzielt. Kommerzielle Scanmikroskope bestehen meist aus einem Scanmodul, dass an das Stativ eines klassischen Lichtmikroskops angeflanscht wird, wobei das Scanmodul alle genannten zur Abrasterung einer Probe zusätzlich nötigen Elemente beinhaltet.

In der konfokalen Scanmikroskopie kann im Falle der Zweiphotonenanregung (oder Mehrphotonenanregung) auf eine Detektionsblende verzichtet werden, da die Anregungswahrscheinlichkeit vom Quadrat der Photonendichte und damit vom Quadrat der Beleuchtungslichtintensität abhängt, die naturgemäß im Fokus viel höher ist als in den Nachbarregionen. Das zu detektierende Fluoreszenzlicht stammt daher mit großer Wahrscheinlichkeit zum aller größten Teil aus der Fokusregion, was eine weitere Differenzierung von Fluoreszenzphotonen aus dem Fokusbereich von Fluoreszenzphotonen aus den Nachbarbereichen mit einer Blendenanordnung überflüssig macht.

Zur simultanen Beleuchtung mit Licht mehrerer Wellenlängen werden meist mehrere Laser eingesetzt. Aus der EP 0 495 930: "Konfokales Mikroskopsystem für Mehrfarbenfluoreszenz" ist eine Anordnung mit einem einzelnen mehrere Laserlinien emittierenden Laser bekannt. In der Praxis werden hierfür in der Regel Mischgaslaser, insbesondere ArKr-Laser, eingesetzt. Zur Detektion sind in der Regel mehrere Detektoren für Detektionslicht unterschiedlicher Wellenlängen vorgesehen. Eine besonders flexible Anordnung zur simultanen Mehrfarbdetektion von Detektionslicht mehrerer Wellenlängen ist in der deutschen Patentschrift DE 199 02 625 "Vorrichtung zur gleichzeitigen Detektion mehrerer Spektralbereiche eines Laserstrahls" offenbart.

Viele Fluoreszenzfarbstoffe sind nur mit ultraviolettem Beleuchtungslicht anregbar. Die Verwendung von ultraviolettem Beleuchtungslicht hat insbesondere für lebende Proben den Nachteil einer sehr viel stärkeren Probenschädigung. Außerdem müssen alle optischen Bauteile für ultraviolettes Licht und für das Fluoreszenzlicht, das auf Grund der Stokesshift eine höhere Wellenlänge aufweist, transparent sein und dürfen durch die Beleuchtung mit ultraviolettem Licht nicht beschädigt werden. Insbesondere bei verkitteten optischen Bauteilen, wie Linsengruppen in einem Mikroskopobjektiv, tritt durch Beleuchtung mit ultraviolettem Licht eine irreversible Schädigung des Kitts und der Linsen auf. Ein weiterer Nachteil der Beleuchtung mit ultraviolettem Licht liegt in der geringeren Eindringtiefe in biologische Proben begründet. Die Nachteile lassen sich durch Zwei- oder Mehrphotonenanregung vermeiden. In der Mehrphotonen-Scanmikroskopie werden die Fluoreszenzphotonen detektiert, die auf einen Zwei- oder Mehrphotonenanregungsprozess zurückzuführen sind. Die Wahrscheinlichkeit eines Zwei-Photonenüberganges ist vom Quadrat der Anregungslichtleistung abhängig. Um hohe Lichtleistungen zu erzielen, ist es daher zweckmäßig, das Beleuchtungslicht zu pulsen, um hohe Pulsspitzenleistungen zu erreichen. Diese Technik ist bekannt und beispielsweise in der amerikanischen Patenschrift US 5,034,613 "Two-photon laser microscopy" und in der deutschen Offenlegungsschrift DE 44 14 940 offenbart. Ein weiterer Vorteil der Mehrphotonenanregung insbesondere in der konfokalen Scanmikroskopie liegt im verbesserten Bleichverhalten; da die Probe nur im Bereich ausreichender Leistungsdichte, also im Fokus eines Beleuchtungslichtstrahles, ausbleicht. Außerhalb dieses Bereichs findet im Gegensatz zur Ein-Photonen-Anregung nahezu kein Bleichen statt.

Alle bekannten Verfahren und Anordnungen zur Untersuchung einer Probe auf der Basis der Mehrphotonenanregung, beschränken sich auf die Anregung eines einzigen Fluoreszenzfarbstoffes. Für viele Anwendungen ist es unverzichtbar, die Probe mit unterschiedlichen Fluoreszenzfarbstoffen oder anderen Markern spezifisch zu markieren, um durch gleichzeitige Anregung aller Fluoreszenzfarbstoffe und Mehrfarbdetektion Informationen über die räumliche Struktur oder die Zusammensetzung der Probe zu erhalten. Die gleichzeitige Anregung mehrerer UV-Fluoreszenzfarbstoffe ist derzeit nur mit Ein-Photonen-Anregung möglich, so dass die negativen Auswirkungen des Einstrahlens von ultraviolettem Licht voll zum Tragen kommen.

Der Erfindung liegt daher die Aufgabe zugrunde, ein Verfahren vorzuschlagen, das eine simultane Mehrfarbdetektion bei verbessertem Bleichverhalten, insbesondere bei im ultravioletten Spektralbereich anregbaren Proben, ermöglicht.

Obige Aufgabe wird durch ein Verfahren gelöst, das gekennzeichnet ist durch folgende Schritte:
- Beleuchten der Probe (27) mit Beleuchtungslicht (15), das Anteile beinhaltet, die ein Vielfaches der ersten Wellenlänge aufweisen, und das andere Anteile beinhaltet, die ein Vielfaches der zweiten Wellenlänge aufweisen, und
- Detektieren des von der Probe (27) ausgehenden Detektionslichtes (29).

Es ist weiterhin Aufgabe der Erfindung ein Scanmikroskop anzugeben, das eine simultane Mehrfarbdetektion bei verbessertem Bleichverhalten, insbesondere bei im ultravioletten Spektralbereich anregbaren Proben ermöglicht.

Diese Aufgabe wird durch ein Scanmikroskop gelöst, das dadurch gekennzeichnet ist, dass das Beleuchtungslicht (15) Anteile beinhaltet, die ein Vielfaches der ersten Wellenlänge aufweisen, und dass das Beleuchtungslicht (15) andere Anteile beinhaltet, die ein Vielfaches der zweiten Wellenlänge aufweisen.

Die Erfindung hat den Vorteil, dass mit verschiedenen Fluoreszenzfarbstoffen markierte Proben bei simultaner Anregung und bei wesentlich verbessertem Bleichverhalten untersuchbar sind.

In einem weiteren Verfahrensschritt erfolgt das Fokussieren des Beleuchtungslichts auf einen Teilbereich der Probe, wodurch eine höhere Leistungsdichte und damit eine höhere Wahrscheinlichkeit für die Mehrphotonenanregung entsteht. In einem weiteren Schritt wird die Probe durch sukzessives Führen des Beleuchtungslichtes über mehrere Teilbereiche abgerastert. Zum Führen des Beleuchtungslichtes dient vorzugsweise eine Strahlablenkeinrichtung mit drehbar gelagerten Spiegeln, die von Galvanometern angetrieben werden.

Ganz besonders vorteilhaft ist eine Ausführungsvariante, bei der das Detektieren des von der Probe ausgehenden Lichtes konfokal erfolgt. Hierzu ist eine Detektionsblende den Detektoren vorgeordnet, die nur Licht, das aus dem beleuchteten Teilbereich stammt, passieren lässt. Eine andere Ausführungsform arbeitet in der sog. Non-Descan-Detektion ohne Detektionsblende. Da die Anregungswahrscheinlichkeit beispielsweise einer Zwei-Photonenanregung vom Quadrat der Photonendichte und damit vom Quadrat der Beleuchtungslichtintensität abhängt, die naturgemäß im Fokus viel höher ist als in den Nachbarregionen, stammt das am Detektor eintreffende Licht mit großer Wahrscheinlichkeit zum aller größten Teil aus der Fokusregion, was eine weitere Differenzierung von Fluoreszenzphotonen aus dem Fokusbereich von Fluoreszenzphotonen aus den Nachbarbereichen mit Hilfe einer Detektionsblende entbehrlich macht.

Zum Detektieren sind in einer Ausgestaltung dichroitische Filter vorgesehen, die das von der Probe ausgehende Detektionslicht, das mehrere Wellenlängen beinhaltet, entsprechend der Wellenlänge bzw. entsprechend einzelner Wellenlängenbereiche mehreren Detektoren zuordnet. Die Detektoren können beispielsweise Photomultiplier, Halbleiterdetektoren, wie Photodioden oder Avalanche-Photodioden, sein. Sie wandeln das Detektionslicht in ein Detektionssignal, dessen Amplitude von der Leistung des Detektionslichtes abhängt, vorzugsweise zu diesem proportional ist, um. In einer ganz besonders bevorzugten Ausgestaltung ist der Detektor ein Multibanddetektor.

Beim Abrastern der Probe werden die Detektionssignale der Position der abgerasterten Teilbereiche zugeordnet., um die Detektionssignale auf einem Display zu einem zwei- oder dreidimensionalen Bild angeordnet darzustellen.

In einer weiteren bevorzugten Ausführungsform ist das Beleuchtungslicht gepulst. Die Lichtquelle beinhaltet hierzu mindestens zwei Pulslaser, die Lichtimpulszüge, die ein Vielfaches der ersten und ein Vielfaches der zweiten Wellenlänge aufweisen emittieren, wobei die Lichtimpulszüge mit einem dichroitischen Strahlteiler zu einem Beleuchtungslichtstrahl zusammengeführt sind. Die Pulslaser sind vorzugsweise derart ausgeführt, dass die Lichtimpulse kürzer als 1 ps sind.

In einer anderen Ausführungsvariante beinhaltet die Lichtquelle nur einen Pulslaser, der Licht der erforderlichen Wellenlängen simultan emittiert.

In einer ganz besonders bevorzugten Ausführung beinhaltet die Lichtquelle einen Pulslaser und einen diesem nachgeordneten Strahlteiler, der das emittierte Licht zu einem ersten und einem zweiten Teilstrahl aufteilt. In einem der Strahlengänge der Teilstrahlen ist ein wellenlängenveränderndes Mittel, wie beispielsweise ein Optisch-Parametrischer-Oszillator oder ein Kristall zur Frequenzvervielfachung angeordnet.

Besonders vorteilhaft ist weiterhin eine Ausführungsvariante, bei der die Lichtquelle ein mikrostrukturiertes optisches Element umfasst, auf das das Licht eines Lasers fokussiert ist, wobei in dem mikrostrukturierten optischen Element eine Umwandlung in Licht anderer Wellenlängen, vorzugsweise in ein breites Wellenlängenspektrum, stattfindet.

Das mikrostrukturierte optische Element ist in einer bevorzugten Ausgestaltung des Scanmikroskops aus einer Vielzahl von mikrooptischen Strukturelementen aufgebaut, die zumindest zwei unterschiedliche optische Dichten aufweisen. Ganz besonders bevorzugt ist eine Ausgestaltung, bei der das optische Element einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der erste Bereich den zweiten Bereich umschließt. Die mikrooptischen Strukturelemente sind vorzugsweise Kanülen, Stege, Waben, Röhren oder Hohlräume.

Das mikrostrukturierte optische Element besteht in einer anderen Ausgestaltung aus nebeneinander angeordnetem Glas- oder Kunststoffmaterial und Hohlräumen. Besonders zu bevorzugen ist die Ausführungsvariante, bei der das mikrostrukturierte optische Element aus Photonic-Band-Gap-Material besteht und als Lichtleitfaser ausgestaltet ist. Vorzugsweise ist zwischen dem Laser und der Lichtleitfaser eine optische Diode vorgesehen, die Rückreflexionen des Lichtstrahles die von den Enden der Lichtleitfaser herrühren, unterdrückt.

Eine ganz besonders bevorzugte und einfach zu realisierende Ausführungsvariante beinhaltet als mikrostrukturiertes optisches Element eine herkömmliche Lichtleitfaser mit einem Faserkerndurchmesser von ca. 9 µm, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der gesamten Faser beträgt in einer bevorzugten Ausgestaltung im Bereich der Verjüngung ca. 2 µm.

In einer weiteren Ausführungsform sind zumindest einige der Photonen des Beleuchtungslichtes verschränkt. In der Patentschrift US 5,796,477 ist ein Verschränkte-Photonen-Mikroskop offenbart, das die Vorteile der Mehrphotonenanregung aufweist, das jedoch extrem hohe Anregungslichtleistungen und die damit verbundenen Nachteile vermeidet. Anstelle von unabhängig voneinander entstandenen Photonen, werden verschränkte Photonen zur Anregung der Probe verwendet. Die Photonen befinden sich in einem sog. quantenmechanisch verschränkten Zustand. Die Wahrscheinlichkeit der Anregung eines Fluorophors in der Probe ist bei der Beleuchtung mit verschränkten Photonen linear von der Anregungslichtleistung und nicht, wie bei der bekannten Zweiphotonenanregung, vom Quadrat der Anregungslichtleistung abhängig; denn im Fokus passen bei geeigneten Randbedingungen verschränkte Photonen hinsichtlich Zeit und Ort prinzipiell immer zueinander.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
Fig. 1 ein erfindungsgemäßes Scanmikroskop,
Fig. 2 ein weiteres erfindungsgemäßes Scanmikroskop,
Fig. 3 ein weiteres erfindungsgemäßes Scanmikroskop mit einem Multibanddetektor,
Fig. 4 ein weiteres erfindungsgemäßes Scanmikroskop mit einem Multibanddetektor und
Fig. 5 eine Lichtquelle für ein erfindungsgemäßes Scanmikroskop.

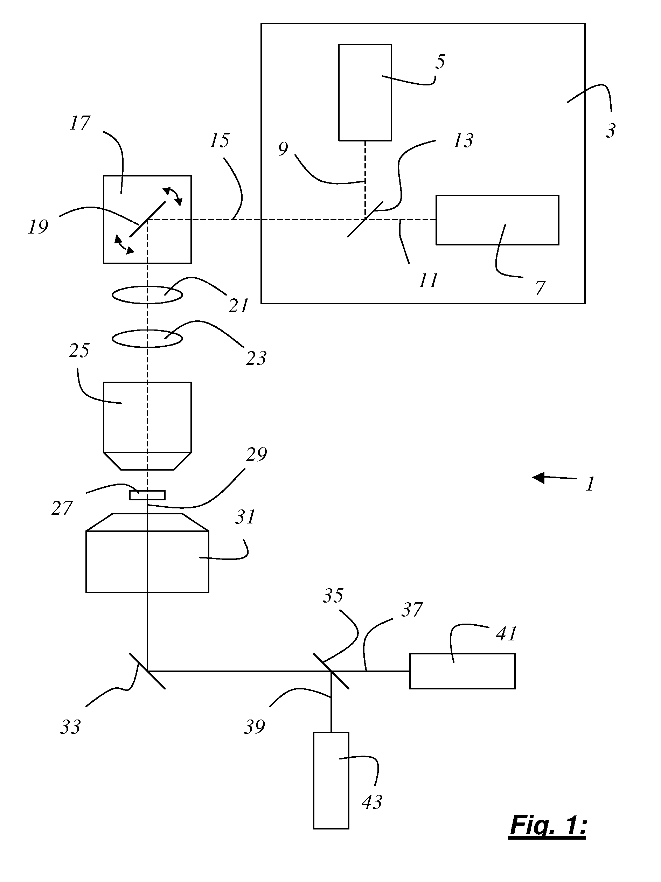

Fig. 1 zeigt schematisch ein erfindungsgemäßes Scanmikroskop 1 mit einer Lichtquelle 3, die einen ersten und einen zweiten Laser 5, 7, die als modenverkoppelte Titan-Saphir-Laser ausgeführt sind, beinhaltet. Das von dem ersten Laser 5 emittierte Licht 9, das eine Wellenlänge von 780 nm auf weist, und das von dem zweiten Laser 7 emittierte Licht 11, das eine Wellenlänge von 960 nm aufweist, wird mit einem dichroitischen Strahlteiler 13 zu dem Beleuchtungslicht 15 vereinigt. Das zu einem Strahl geformte Beleuchtungslicht 15 gelangt zu einer Strahlablenkeinrichtung 17, die einen kardanisch aufgehängten Spiegel 19 beinhaltet. Durch die Scanoptik 21, die Tubusoptik 23 und das Objektiv 25, wird das zu einem Strahl geformte Beleuchtungslicht 15 über bzw. durch die Probe 27, die zwei bei 390 nm bzw. bei 480 nm optisch anregbare Fluoreszenzfarbstoffe beinhaltet, geführt. Das von der Probe 27 ausgehende Detektionslicht 29 wird von einem Kondensor 31 kollimiert und von einem Spiegel 33 zu einem dichroitischen Strahlteiler 35 reflektiert, der das Detektionslicht räumlich spektral in zwei Teildetektionslichtstrahlen 37, 39 aufteilt, die von zwei Detektoren 41, 43, die beide als Photomultiplier ausgeführt sind detektiert werden und jeweils in ein in der Amplitude zur Leistung der Teildetektionslichtstrahlen 37, 39 proportionales elektrisches Signal umgewandelt werden.

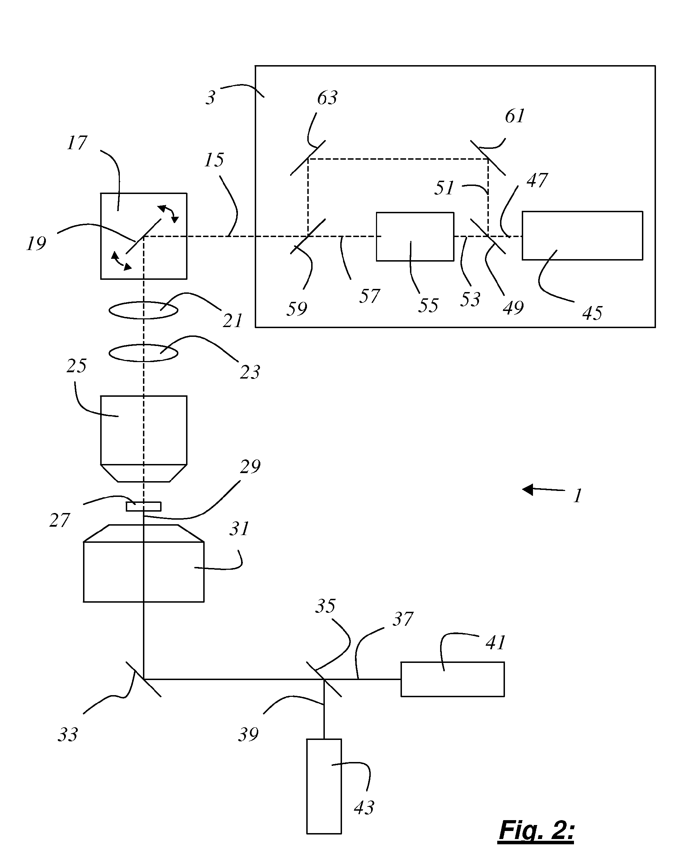

Fig. 2 zeigt ein erfindungsgemäßes Scanmikroskop 1, das ebenso, wie das in Fig. 1 gezeigte Scanmikroskop in Non-Descan-Detektion arbeitet. Die Lichtquelle 3 dieser Ausführung beinhaltet einen Laser 45, der als modenverkoppelte Titan-Saphir-Laser ausgeführt ist. Das Licht 47 des Lasers 45 wird mit einem Strahlteiler 49 in einen ersten und zweiten Teillichtstrahl 51 und 53 aufgespalten. Der Teillichtstrahl 53 gelangt zu einem Optisch-Parametrischen-Oszillator 55. Der vom Optisch-Parametrischen-Oszillator 55 ausgehende Teillichtstrahl 57 wird zu einem dichroitischen Strahlvereiniger 59 geführt, um dort mit dem ersten Teillichtstrahl 51, der über die Spiegel 61 und 63 geführt ist, zum Beleuchtungslicht 15 vereinigt zu werden.

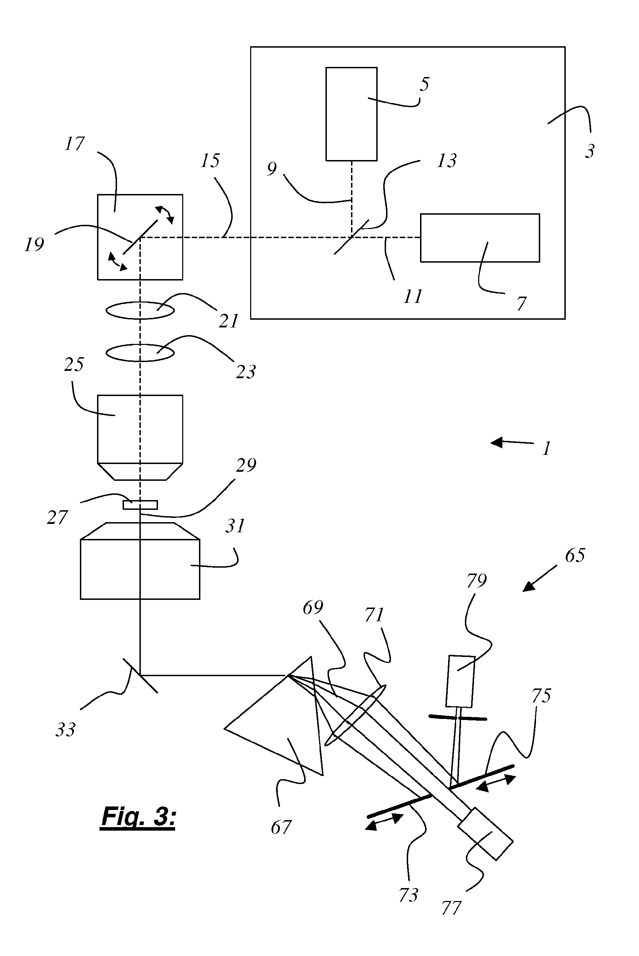

Fig. 3 zeigt ein erfindungsgemäßes Scanmikroskop 1, das ebenso, wie das in Fig. 1 gezeigte Scanmikroskop in Non-Descan-Detektion arbeitet. Zur Detektion ist ein Multibanddetektor 65 vorgesehen. Das Detektionslicht 29 wird mit einem Prisma 67 räumlich spektral aufgespalten. Eine weitere Möglichkeit der spektralen Aufspaltung ist die Verwendung eines Reflexions-, oder Transmissionsgitters. Der spektral aufgespaltene Lichtfächer 69 wird mit der Fokussieroptik 71 fokussiert und trifft anschließend auf eine Spiegelblendenanordnung 73, 75. Die Spiegelblendenanordnung 73, 75, die Mittel zur spektralen, räumlichen Aufspaltung (Prisma 67), die Fokussieroptik 71 und die Detektoren 77 und 79 werden zusammen als Multibanddetektor 65 bezeichnet. Ein Teil des aufgespaltenen Lichtfächers 69 des Detektionslichtes 29, der nur Licht eines vorgewählten Spektralbereichs umfasst, passiert die Spiegelblendenanordnung und wird von dem Detektor 77, der als Photomultiplier ausgeführt ist detektiert. Ein anderer Teil des aufgespaltenen Lichtfächers 69 wird an der Spiegelblendenanordnung 75 reflektiert und gelangt zu Detektor 79, der ebenfalls als Photomultiplier ausgeführt ist. Die Spiegelblendenanordnungen sind, in den durch die Doppelpfeile illustrierten Richtungen verschiebbar, so dass die spektralen Detektionsbereiche des den Detektoren 77, 79 zugeführten Lichtes kontinuierlich einstellbar sind. Es ist möglich, jedoch der Übersichtlichkeit halber nicht dargestellt, noch weitere Detektoren einzubauen und weiteren Spiegelblenden zuzuordnen. In den Detektoren 77, 79 werden elektrische, zur Leistung des von der Probe 27 ausgehenden Detektionslichtes 29 des jeweiligen Spektralbereichs proportionale Detektionssignale erzeugt, die in einer nicht gezeigten Steuerund Verarbeitungseinheit den in der Strahlablenkeinrichtung mit Hilfe eines Positionssensors erfassten Positionssignalen zugeordnet werden. Anschließend werden sie mit einem PC zu einem Abbild zusammengesetzt. Dieser Vorgang ist dem Fachmann geläufig und der Übersichtlichkeit wegen nicht dargestellt. Weggelassen sind wegen der besseren Anschaulichkeit außerdem einige optische Elemente zur Führung und Formung der Lichtstrahlen. Diese sind einem auf diesem Gebiet tätigen Fachmann hinlänglich bekannt.

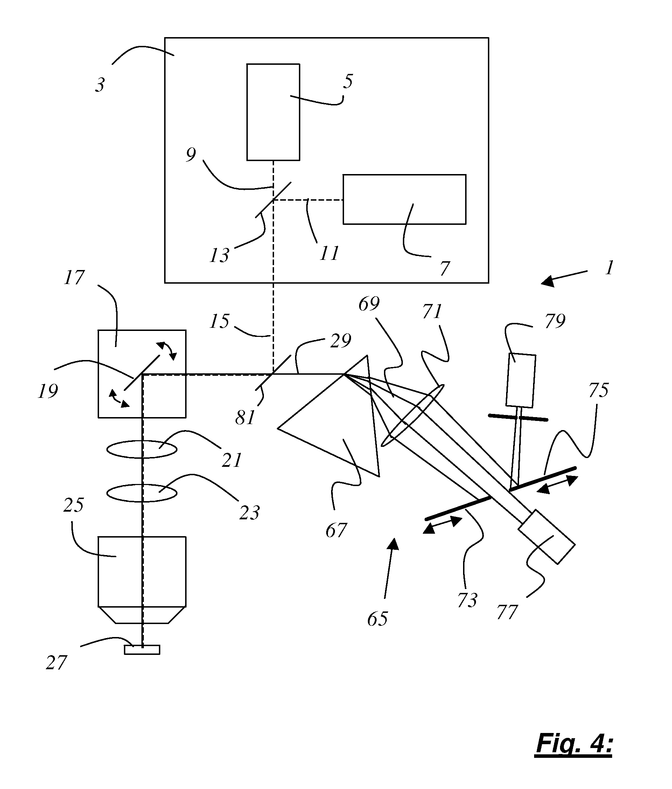

Fig. 4 zeigt ein erfindungsgemäßes Scanmikroskop 1 mit Descan-Detektion. Das Beleuchtungslicht 15 der Lichtquelle 3 wird von einem dichroitischen Strahlteiler 81 zur Strahlablenkeinrichtung 17 reflektiert und von dieser durch die Scanoptik 21, die Tubusoptik 23 und das Objektiv 25 hindurch über bzw. durch die Probe 27 geführt. Das von der Probe 27 ausgehende Detektionslicht 29 gelangt auf demselben Lichtweg über die Strahlablenkeinrichtung 17 zurück zum dichroitischen Strahlteiler 81, passiert diesen und die der Übersichtlichkeit wegen nicht gezeigte Detektionsblende und trifft anschließend auf den Multibanddetektor 65.

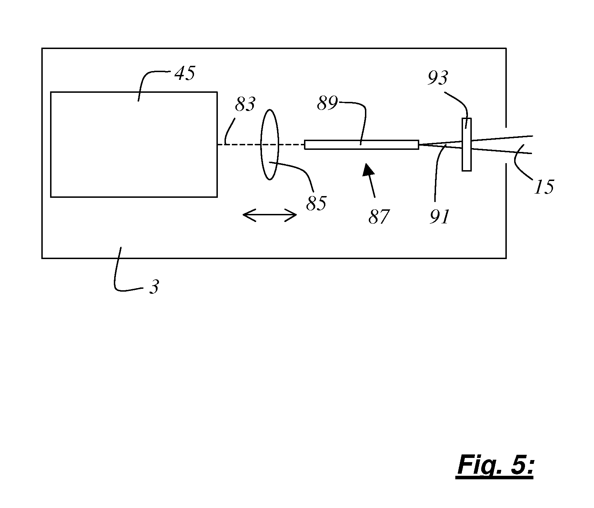

Fig. 5 zeigt eine Lichtquelle 3 für ein erfindungsgemäßes Scanmikroskop 1, die einen Laser 45 beinhaltet, der als diodenlasergepumpter, modengekoppelter Titan:Saphir-Laser ausgeführt ist und der einen gepulsten Lichtstrahl 83, der gestrichelt gezeichnet ist, emittiert. Die Dauer der Lichtimpulse beträgt ca. 100 fs bei einer Repetitionsrate von ca. 80 MHz. Der Lichtstrahl 83 wird mit der Fokussieroptik 85, die als Zoomoptik ausgestaltet und entlang der Fortpflanzungsrichtung des Lichtstrahles verschiebbar angeordnet ist, auf ein mikrostrukturiertes optisches Element 87, das aus einer Lichtleitfaser 89 aus Photonic-Band-Gap-Material besteht, fokussiert. In dem mikrostrukturierten optischen Element 87 wird das Licht des Lasers spektral verbreitert. Aus dem Spektrum des spektral verbreiterten Lichts 91, das Wellenlängen von ca. 300 nm bis 1600 nm aufweist, wird mit einem Bandfilter 93 Licht zweier zur erfindungsgemäßen Beleuchtung geeigneter Wellenlängen herausgefiltert, das das Beleuchtungslicht 15 bildet.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Scanmikroskop
- 3: Lichtquelle
- 5: erster Laser
- 7: zweiter Laser
- 9: Licht
- 11: Licht
- 13: dichroitischer Strahlteiler
- 15: Beleuchtungslicht
- 17: Strahlablenkeinrichtung
- 19: kardanisch aufgehängter Spiegel
- 21: Scanoptik
- 23: Tubusoptik
- 25: Objektiv
- 27: Probe
- 29: Detektionslicht
- 31: Kondensor
- 33: Spiegel
- 35: dichroitischer Strahlteiler
- 37: Teildetektionslichtstrahl
- 39: Teildetektionslichtstrahl
- 41: Detektor
- 43: Detektor
- 45: Laser
- 47: Licht
- 49: Strahlteiler
- 51: Teillichtstrahl
- 53: Teillichtstrahl
- 55: Optisch-Parametrischer-Oszillator
- 57: Teillichtstrahl
- 59: dichroitischer Strahlvereiniger
- 61: Spiegel
- 63: Spiegel
- 65: Multibanddetektor
- 67: Prisma
- 69: spektral aufgespaltener Lichtfächer
- 71: Fokussieroptik
- 73: Spiegelblendenanordnung
- 75: Spiegelblendenanordnung
- 77: Detektor
- 79: Detektor
- 81: dichroitischer Strahlteiler
- 83: Lichtstrahl
- 85: Fokussieroptik
- 87: mikrostrukturiertes optisches Element
- 89: Lichtleitfaser
- 91: spektral verbreitertes Licht
- 93: Bandfilter

## Patentansprüche

1. Verfahren zur Untersuchung einer Probe (27), die mindestens zwei optische Übergangslinien aufweist und mindestens mit Licht einer ersten und mit Licht einer zweiten Wellenlänge optisch anregbar ist, **gekennzeichnet durch** folgende Schritte:
• Beleuchten der Probe (27) mit Beleuchtungslicht (15), das Anteile beinhaltet, die ein Vielfaches der ersten Wellenlänge aufweisen, und das andere Anteile beinhaltet, die ein Vielfaches der zweiten Wellenlänge aufweisen, und
• Detektieren des von der Probe (27) ausgehenden Detektionslichtes (29).

2. Verfahren nach Anspruch 1, **gekennzeichnet durch** den weiteren Schritt:
• Fokussieren des Beleuchtungslichtes (15) auf einen Teilbereich der Probe (27).

3. Verfahren nach einem der Ansprüche 1 oder 2, **gekennzeichnet durch** den weiteren Schritt:
• Abrastern der Probe (27) **durch** sukzessives Führen des Beleuchtungslichtes (15) über mehrere Teilbereiche.

4. Verfahren nach einem der Ansprüche 1 bis 3, **dadurch gekennzeichnet, dass** das Detektieren konfokal erfolgt.

5. Verfahren nach einem der Ansprüche 1 bis 4, **gekennzeichnet durch** die weiteren Schritte:
• Umwandeln des Detektionslichtes (29) in ein Detektionssignal, dessen Amplitude von der Leistung Detektionslichtes (29) abhängt.
• Zuordnen der Detektionssignale zu den abgerasterten Teilbereichen.

6. Verfahren nach Anspruch 5, **gekennzeichnet durch** den weiteren Schritt:
• Darstellen des Detektionssignals auf einem Display.

7. Verfahren nach Anspruch 1, **dadurch gekennzeichnet, dass** das Detektieren in mindestens zwei Detektionskanälen in Abhängigkeit von der Wellenlänge des Detektionslichtes erfolgt.

8. Verfahren nach Anspruch 1, **dadurch gekennzeichnet, dass** das Beleuchtungslicht (15) gepulst ist.

9. Scanmikroskop (1) mit mindestens einer Lichtquelle (3) die Beleuchtungslicht (15) zur Beleuchtung einer Probe (27) emittiert, wobei die Probe (27) mindestens zwei optische Übergangslinien aufweist und mindestens mit Licht einer ersten und mit Licht einer zweiten Wellenlänge optisch anregbar ist, mit mindestens einem Detektor (41, 43, 65, 77, 79) zur Detektion des von der Probe (27) ausgehenden Detektionslichtes (29) und einem Objektiv (25) zur Fokussierung des Beleuchtungslichtes (15) auf einen Teilbereich der Probe (27), **dadurch gekennzeichnet, dass** das Beleuchtungslicht (15) Anteile beinhaltet, die ein Vielfaches der ersten Wellenlänge aufweisen, und dass das Beleuchtungslicht (15) andere Anteile beinhaltet, die ein Vielfaches der zweiten Wellenlänge aufweisen.

10. Scanmikroskop (1) nach Anspruch 9, **dadurch gekennzeichnet, dass** die Lichtquelle (3) mindestens einen Laser (5, 7, 45) beinhaltet, der repetierend Lichtimpulse emittiert.

11. Scanmikroskop (1) nach Anspruch 10, **dadurch gekennzeichnet, dass** die Lichtimpulse zeitlich kürzer als 1 ps sind.

12. Scanmikroskop (1) nach einem der Ansprüche 9 bis 11, **dadurch gekennzeichnet, dass** die Lichtquelle (3) ein mikrostrukturiertes optisches Element (87) beinhaltet.

13. Scanmikroskop (1) nach Anspruch 12, **dadurch gekennzeichnet, dass** das mikrostrukturierte optische Element aus Photonic-Band-Gap-Material besteht.

14. Scanmikroskop (1) nach Anspruch 12, **dadurch gekennzeichnet, dass** das mikrostrukturierte optische Element als Lichtleitfaser (89) ausgestaltet ist.

15. Scanmikroskop (1) nach Anspruch 9, **dadurch gekennzeichnet, dass** die Lichtquelle einen Optisch-Parametrischen-Oszillator (55) beinhaltet.
